(19) Europäisches Patentamt / European Patent Office / Office européen des brevets

(11) **EP 2 646 242 B1**

(12) **EUROPEAN PATENT SPECIFICATION**

(45) Date of publication and mention of the grant of the patent:
**10.06.2015 Bulletin 2015/24**

(21) Application number: **11791650.2**

(22) Date of filing: **29.11.2011**

(51) Int Cl.:
**B29C 67/00** (2006.01)

(86) International application number:
**PCT/NL2011/050817**

(87) International publication number:
**WO 2012/074394 (07.06.2012 Gazette 2012/23)**

(54) **METAL SHEET - FIBER REINFORCED COMPOSITE LAMINATE**

BLECH- UND FASERVERSTÄRKTES VERBUNDLAMINAT

STRATIFIÉ COMPOSITE RENFORCÉ PAR DES FIBRES ET DES FEUILLES DE MÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2010 NL 2005779**

(43) Date of publication of application:
**09.10.2013 Bulletin 2013/41**

(73) Proprietor: **GTM-Advanced Structures B.V.
2497 GB 's-Gravenhage (NL)**

(72) Inventor: **GUNNINK, Jan Willem
NL-2911 BB Nieuwerkerk a/d IJssel (NL)**

(74) Representative: **Brouwer, Hendrik Rogier et al
Arnold & Siedsma
P.O. Box 18558
2502 EN Den Haag (NL)**

(56) References cited:
**EP-A1- 2 085 215    US-A1- 2005 175 813**

- **O.C. VAN DER JAGT, A. BEUKERS: "The potential of a new rigid-rod polymer fibre ('M5') in advanced composite structures", ELSEVIER POLYMER, no. 40, 1 January 1999 (1999-01-01), pages 1035-1044, XP002662683,**
- **J. Sinke: "Manufacturing Principles for Fiber Metal Laminates", , 28 July 2009 (2009-07-28), XP002662684, Retrieved from the Internet: URL: http://www.iccm-central.org/Proceeding s/ ICCM17proceedings/Themes/Materials/FIBRE %20METAL%20LAM%20&%20HYB%20COMP/D 5.1%20Sin ke.pdf [retrieved on 2011-11-03]**
- **ION DINCA ET AL: "Aluminium/glass fibre and aluminium/carbon fibre hybrid laminates", INCAS BULLETIN, vol. 2, no. 2/2010, 1 June 2010 (2010-06-01), pages 33-99, XP002662685,**

**Description**

FIELD OF THE INVENTION

The present invention relates to a fiber-metal laminate comprising mutually bonded fiber-reinforced composite layers and metal sheets. More particularly, the invention relates to a fiber-metal laminate comprising mutually bonded fiber-reinforced composite layers and metal sheets having an optimal configuration.

BACKGROUND OF THE INVENTION

The behavior of engineering structures under load is determined by many design parameters, and defining the optimum material for a specific application is often a tedious task and moreover has to deal with conflicting requirements. Among the commonly used engineering materials are metals, like steel alloys, titanium alloys, aluminum alloys; fiber-reinforced composites, like glass fiber composites, carbon fiber composites, and aramid composites; and hybrid materials, further defined below.

Fiber-reinforced composites offer considerable weight advantage over other preferred materials, such as metals. Generally, the weight savings are obtained at the sacrifice of other important material properties such as ductility, toughness, bearing strength, conductivity and cold forming capability. To overcome these deficiencies, new hybrid materials called fiber-metal laminates have been developed to combine the best attributes of metal and composites.

Fiber-metal laminates, such as those described in US 4,500,589 and US 5,039,571 are obtained by stacking alternating thin layers of metal (most preferably aluminum) and fiber-reinforced prepregs, and curing the stack under heat and pressure. These materials are increasingly used in industries such as the transportation industry, for example in ships, cars, trains, aircraft and spacecraft. They can be used as sheets and/or a reinforcing element and/or as a stiffener for (body) structures of these transports, like for aircraft for wings, fuselage and tail panels and/or other skin panels and structural elements of aircraft.

US 2005/175813 A1 discloses a fiber-metal laminate comprising mutually bonded fiber-reinforced composite layers and metal sheets. Suitable fibers in the laminate have a tensile modulus exceeding 270 GPa, such as the disclosed M5and Zylon fibers.

EP 2085215 A1 discloses several possible combinations of fiber-metal laminates in accordance with the preamble of claim 1, including a fiber metal laminate that combines S2 glass fiber composite layers with aluminum /2024-T3 alloy sheets.

Structures need to meet many design requirements that range from static loadings to fatigue, impact, corrosion, structural response/damping, weight, cost, and more. Although fiber-metal laminates may provide improved resistance to fatigue (in particular crack propagation) over metal alloys, like aluminum alloys, their behavior in a structure is still open for improvement. It would in particular be highly desirable if the right metal and fibers could be identified in terms of their properties to achieve the right overall performance of the fiber-metal laminate (also referred to as FML), based on these constituents.

It is an object of the invention to provide a fiber-metal laminate comprising mutually bonded fiber-reinforced composite layers and metal sheets with an optimal structural response.

SUMMARY OF THE INVENTION

According to one aspect of the present invention there is provided a fiber-metal laminate comprising mutually bonded fiber-reinforced composite layers and metal sheets having a range of fiber and metal properties that yield an optimal structural response.

In accordance with the present invention a fiber-metal laminate is provided comprising mutually bonded fiber-reinforced composite layers and metal sheets, wherein the fiber and metal properties in at least one combination of a fiber-reinforced composite layer and an adjacent metal sheet satisfy the following relationships simultaneously:

$$\varepsilon_{fibre\ tension} > K_{sf} * \sigma_{tu} / (1.5 * E_{t\ metal}) \qquad (1)$$

$$E_{fibre\ tension} > K_{stiff} * E_{t\ metal} \qquad (2)$$

$$\varepsilon_{fibre\ compression} > K_{sf} * \sigma_{tu} / (1.5 * K_{lf} * E_{t\ metal}) \qquad (3)$$

wherein the strain concentration factor $K_{sf}$, the stiffness factor $K_{stiff}$ and the load factor $K_{lf}$ satisfy

$$2.75 \leq K_{sf} < 5.7 \qquad\qquad (4)$$

$$K_{stiff} \geq 1.28 \qquad\qquad (5)$$

$$1.5 \leq K_{lf} \leq 3.5 \qquad\qquad (6)$$

and wherein

$\sigma_{tu}$ = ultimate tensile strength of the metal
$E_{t\,metal}$ = tensile Young's modulus of the metal
$\varepsilon_{fibre}$ tension = elastic tensile strain of the fiber
$E_{fibre}$ tension = tensile elastic modulus of the fibre
$\varepsilon_{fibre}$ compression = elastic compression strain of the fiber

Laminates according to the invention use a fiber-metal combination that satisfies the above relations (1) to (6). Such configurations are readily obtained by first selecting a metal, determining its ultimate tensile strength and tensile Young's modulus at room temperature and calculating the minimum required elastic fiber strains (tension and compression) and elastic fiber modulus with the aid of relations (1) to (3), using the minimum values for the strain concentration factor $K_{sf}$, the stiffness factor $K_{stiff}$ and the maximum value for the load factor $K_{1f}$, as defined in relations (4) to (6). Any fiber with an elastic strain exceeding the calculated strain values (eq. 1and 3), and with an elastic modulus exceeding the calculated modulus (eq. 2) will provide a laminate with the desired performance in a structure that is designed for complex loading situations, which can be loaded in compression, and/or tensile and/or fatigue.

With an optimal fiber-metal laminate is meant a fiber-metal laminate that has the right combination of stiffness, static strength and fatigue resistance when used in a structure. The invention is based on the insight that in structures, one important design parameter relates to strain concentration, and not, as is common practice to stress concentration. Selecting material properties on the basis of the strain concentration factor $K_{sf}$ is unique and an important step forward.

To obtain a robust fiber-metal laminate according to the invention, it is important that the stiffness factor $K_{stiff}$ is chosen properly. It has turned out that a stiffness factor $K_{stiff} \geq 1.28$ yields optimum structural performance. Two major drivers are important in this respect, i.e. structural fatigue behavior and general stiffness (predominantly for compression-buckling and aero-elastic performance). Due to manufacture of products and higher applied loads the crack initiation of the metal layers may start prematurely. By choosing $K_{stiff} \geq 1.28$ it is assured that the fiber has sufficient stiffness to support the metal layer and match adequately the stiffness of the metal applied in the fiber-metal laminate. Preferred are fiber-metal laminates wherein the stiffness factor $K_{stiff}$ is chosen such that $K_{stiff} \geq 1.34$ is satisfied, and more preferred such that $K_{stiff} \geq 1.42$ is satisfied.

The strain concentration factor for tensile and fatigue load dominated fiber-reinforced composite structures typically varies between $2.75 \leq K_{sf} < 5.7$, since composite structures typically have an ultimate tensile design strain value of $0.4\% < \varepsilon < 0.5\%$, carbon fibers applied in such structures have failure strains in the order of $\varepsilon_f = 1.5\%$ and in general the composite fibers are in tension more or less elastic until failure. It has been found that by adopting the strain concentration factor range according to the invention (equation (4)) fiber-metal laminates are obtained that are resistant to tensile and fatigue structural loadings, but also to compression loadings. High performing structures are subjected to a significant amount of different loading cases, like, tension, compression, alternating load case (fatigue load cases) etc. The ultimate positive to negative load cases of these structures range between $1.5 \leq K_{lf} \leq 3.5$, consequently the elastic compression strain of the fiber need to meet eq. 3, taking into account the load factor $K_{lf}$(eq. 6). However, it has to be realized also that fibers can have a stress strain behaviour like metals; i.e. an elastic and (semi-)plastic behaviour. Research has shown that this phenomenon can happen especially for fibers in compression. The ultimate elastic strain is the strain at which the fibre stiffness drops very significantly. In that respect it is similar to the yield strain or even better proportional limit of metals. Since the invention is related to fiber metal laminates for optimum structures it is accepted that common compression tests for composite structures will give adequate elastic compression strain. Preferred fiber-metal laminates are those wherein the load factor $K_{lf}$ is chosen such that $1.5 \leq K_{lf} \leq 2.5$, and more preferably such that $1.5 \leq K_{lf} \leq 2.0$.

The laminates according to the invention are hardly sensitivity to compression after impact degradation (quite often even better than its metal ingredient) and therefore can be designed with a substantial higher strain to failure as for fiber composite structures. Furthermore, combining the fibrous composite layers and the metal sheets with properties that satisfy equations (1) to (6) results in a fiber-metal laminate with a higher stiffness than the metal sheets above the proportionality limit thereof, and consequently will have increased yield strength. The effect of reduced stiffness of the metal in the plastic range is minimized therefore.

In another embodiment of the invention, the fiber and metal properties for all fiber-reinforced composite layers and metal sheets satisfy the relationships (1) to (6).

In a preferred embodiment, a fiber-metal laminate is provided wherein the strain concentration factor $K_{sf}$ is chosen such that $3.0 < K_{sf} < 5.0$ is satisfied. Such laminates are advantageously used in tensile and fatigue dominated structures, in other words in structures that are not or less compression critical. In another preferred embodiment, a fiber-metal laminate is provided wherein the stiffness factor $K_{stiff}$ is chosen such that $K_{stiff} \geq 1.34$ is satisfied. Such laminates are more advantageously used in structures more sensitive to compression-buckling, in other words in structures that are less tensile and fatigue loading critical. In another preferred embodiment, a fiber-metal laminate is provided wherein the stiffness factor $K_{stiff}$ is chosen such that $K_{stiff} \geq 1.42$ is satisfied. Such laminates are more advantageously used in highly compression-buckling dominated structures, in other words in structures that are still tensile and fatigue loaded as well, but hardly sensitive to it, i.e. hardly governed by these loadings.

According to another aspect of the invention, a fiber-metal laminate is provided wherein the fraction of fibers that satisfy the relationships (1) to (6) is at least 25% by volume of the total volume of the fiber-reinforced composite layers, more preferred at least 30% by volume, and most preferred at least 35% by volume.

Particular preferred fiber-metal laminates according to the invention are characterized in that the volume fraction of fibers that satisfy the relationships (1) to (6) is $0.35 < V_f < 0.6$ and more preferred $0.40 < V_f < 0.54$.

According to another aspect of the invention, a fiber-metal laminate is provided wherein the metal volume fraction MVF > 48%, more preferably MVF > 52% and most preferably MVF > 58%.

According to a further aspect of the invention a fiber-metal laminate is provided comprising a number of n mutually bonded and alternating fiber-reinforced composite layers and metal sheets. The number of layers n in the fiber-metal laminate of the invention can vary between wide limits by preferably ranges from 3 to 100, more preferably from 3 to 50.

According to the invention, the fiber-metal laminates preferably comprise metal sheets of a different metal. Preferred laminates comprise metal sheets having a thickness that ranges between 0.08 mm and 25.0 mm, and more preferably between 0.2 mm and 12.5 mm, and most preferably between 0.4 and 4.0 mm, the end points of the indicated ranges not included.

In preferred embodiment, the metal is selected from steel alloys, aluminum alloys, and titanium alloys in particular. In another preferred embodiment, a fiber-metal laminate is provided wherein at least one of the metal layers comprises an aluminum alloy with a stiffness of $E_{t\ metal} > 70GPa$, more preferably > 75 GPa.

In a further preferred embodiment of the invention, a fiber-metal laminate is provided wherein the fiber-reinforced composite layers comprise high stiffness glass fibers having a tensile modulus of elasticity > 92.5 GPa and more preferably > 100 GPa, Copol fibers (developed by Tejin) or carbon fibers. Particularly preferred carbon fibers are T1000 and/or IM10 carbon fibers. However, due to potential galvanic action, the combination of most of the aluminium alloys with carbon fibers is not preferred, in case these materials are adjacent to each other. This combination is only preferred if the aluminium alloys and carbon are shielded from each other by an insulating layer, like a glass layer or with coated carbon fibers. The combination of these aluminium alloys and carbon is further only preferred in a non humid and/or non corrosive and/or inert environment, which will prevent or largely reduce the potential of galvanic corrosion. Such application is for instance for space applications. However it should be noticed that new grades of aluminium alloys (in particular aluminium-lithium alloys) can have a galvanic neutral outside surface and therefore do not or hardly corrode with carbon fibers. These alloys, like the Airware™ alloys from Constellium, in combination of stiff carbon fiber are therefore part of the invention. Furthermore, it should be realized that potential galvanic action will (almost) not occur between carbon fibers and steel alloys and titanium alloys.

The invention also relates to the use of a fiber-metal laminate according to the invention, i.e. satisfying relations (1) to (6), in a non corrosive, non humid or inert environment, even when the metal and the fiber are not galvanic neutral with respect to each other.

The fiber reinforced composite layers may comprise substantially continuous fibers that extend mainly in one direction and/or may comprise substantially continuous fibers that extend mainly in two perpendicular directions, such as in a woven fabric or cross ply. For advanced structures with complex loading and stiffness requirements the fiber reinforced composite layers may comprise substantially continuous fibers that extend mainly in the rolling direction of the metal, perpendicular to the rolling direction and with an angle to the rolling direction, whereby the angle directions will be symmetrical to the rolling direction.

According to still another aspect of the invention, a fiber-metal laminate is provided wherein the number of fiber-reinforced composite layers and/or metal sheets varies between cross-sections, and therefore also the fiber-metal laminate's thickness. Such laminates can also have a tapered thickness and offer additional design freedom:

In yet another aspect of the invention, an assembly of a fiber-metal laminate according to the invention and a further element is provided, the further element being connected to the fiber-metal laminate by a bonding layer, comprising an adhesive and/or a fiber-reinforced composite or by mechanical means like riveting and/or bolting. The further element preferably comprises a structural element selected from a flat or curved doubler; a stiffener, such as an angle section, Z-stringer, hat stringer, C-stringer, Y-stringer; a spar(section), rib(section), shear-cleat and/or frame(section) of an aircraft structure. The further element preferably is made from a metal, such as an aluminum alloy, titanium alloy and/or steel alloy; a fiber-reinforced composite material, such as those based on carbon fibres, aramid fibres, glass fibres, PBO fibres, co-polymer fibres; hybrid materials, such as ARALL®, Glare®, CentrAl®; a fiber-metal laminate according to the invention, and combinations thereof.

The invention further relates to an aircraft structural primary part, such as a fuselage, wing and/or tail plane, comprising in at least one location a fiber-metal laminate according to the invention. Particularly preferred is such a part comprising at least one aluminum lithium sheet.

The invention also relates to a method for selecting the metal sheet properties and the fiber properties in a fiber-metal laminate comprising mutually bonded fiber-reinforced composite layers and metal sheets in order to obtain optimum fatigue properties of the fiber-metal laminate. The method comprises selecting the metal alloy and the fiber in a combination of a fiber-reinforced composite layer and an adjacent metal sheet, such that the fiber and metal properties satisfy the following relationships simultaneously:

$$\varepsilon_{\text{fibre tension}} > K_{sf} * \sigma_{tu} / (1.5 * E_{t \, \text{metal}}) \qquad (1)$$

$$E_{\text{fibre tension}} > K_{\text{stiff}} * E_{t \, \text{metal}} \qquad (2)$$

$$\varepsilon_{\text{fibre compression}} > K_{sf} * \sigma_{tu} / (1.5 * K_{lf} * E_{t \, \text{metal}}) \qquad (3)$$

wherein the strain concentration factor $K_{sf}$, the stiffness factor $K_{\text{stiff}}$ and the load factor $K_{lf}$ satisfy

$$2.75 \leq K_{sf} < 5.7 \qquad (4)$$

$$K_{\text{stiff}} \geq 1.28 \qquad (5)$$

$$1.5 \leq K_{lf} \leq 3.5 \qquad (6)$$

and

$\sigma_{tu}$ = ultimate tensile strength of the metal
$E_{t \, \text{metal}}$ = tensile Young's modulus of the metal
$\varepsilon_{\text{fibre}}$ tension = elastic tensile strain of the fiber
$E_{\text{fibre}}$ tension = tensile elastic modulus of the fibre
$F_{\text{fibre}}$ compression = elastic compression strain of the fiber

Further embodiments of the method refer to embodiments of the fiber-metal laminate, as described above and below in the context of the fiber-metal laminate according to the invention. A preferred embodiment of the method for instance is one in which the fiber and metal properties of all fiber-reinforced composite layers and metal sheets in the laminate satisfy relationships (1) to (6).

BRIEF DESCRIPTION OF THE FIGURES & TABLES

Figure 1 - is a view in perspective of a fiber-metal laminate according to an embodiment of the present invention;
Figure 2 - is a view in perspective of a fiber-metal laminate according to another embodiment of the present invention;

Figure 3 - is a view in perspective of a fiber-metal laminate according to another embodiment of the present invention;

Figure 4 - is a view in perspective of a fiber-metal laminate according to another embodiment of the present invention;

Figure 5 - is a view in perspective of a fiber-metal laminate according to another embodiment of the present invention;

Figure 6 - is a view in perspective of a fiber-metal laminate according to another embodiment of the present invention;

Figure 7 - illustrates the relationship of tensile stress and strain of a metal sheet, as used in the fiber-metal laminate of the present invention;

Figure 8 - illustrates a relationship of tensile stress and strain of a layer of fiber-reinforced composite, as used in the fiber-metal laminate of the present invention;

Figure 9 - illustrates the relationship between the minimum required elastic fiber strain and the ratio of tensile strength to tensile modulus of the metal as used in a fiber-metal

laminate according to the present invention;

Figure 10- illustrates a relationship between the minimum fiber compression strain and the ratio of tensile strength to tensile modulus of the metal as used in a fiber-metal laminate according to the present invention;

Figure 11 - illustrates a relationship between the minimum fiber tension modulus and the tensile modulus of the metal as used in a fiber-metal laminate according to the present invention;

Table 1 - illustrates the mechanical properties of typical metals as can be used in the fiber-metal laminate according to the invention.

Table 2-illustrates the properties of typical fibers as can be used in the fiber-metal laminate according to the invention.

Table 3 - illustrates some fiber-metal laminates which are according to the invention as well as fiber-metal laminates which are not according to the invention.

## DETAILED DESCRIPTION OF THE INVENTION

In the following description, reference is made to the accompanying drawings, which form a part hereof, and which show, by way of illustration, specific embodiments in which the invention may be practiced. The present invention, however, may be practiced without the specific details or with certain alternative equivalent methods to those described herein.

The basis of the present invention is a unique arrangement of fiber-reinforced composite layers and at least one metal sheet. In accordance with the invention a fiber-metal laminate is provided comprising fiber-reinforced composite layers and metal sheets, wherein the fiber properties relate to the metal properties in a specific manner, as given by equations (1) to (6). The fiber-reinforced composite layers preferably comprise fibers pre-impregnated with adhesive (prepreg). The system of prepreg layers and metal sheets is preferably processed under heat and pressure to cure the adhesive and form a solid panel or component.

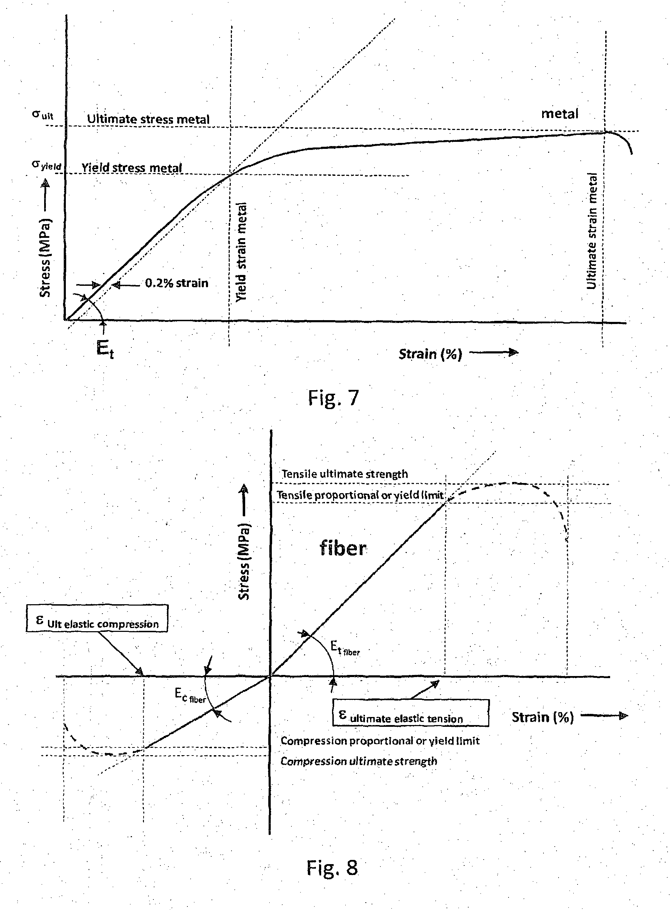

It has been discovered by the inventor that fiber-metal laminates with fiber properties according to equations (1) to (6) have better structural properties, i.e. an improved strength, stiffness, fatigue resistance and damage tolerance than fiber-metal laminates known from the state of the art. The parameters used in equations (1) to (3) are defined in figures 7 and 8. A significant difference in behavior can be observed between a metal as used in the metal sheets of a fiber-metal laminate, and fibrous composites. Metals show an elastic - plastic behavior as shown in figure 7, whereby the metal can be plastically deformed above a yield stress until the ultimate tensile strength of the metal $\sigma_{tu}$ is reached at a relatively large strain to failure. In most cases this strain to failure is larger than 4% and may be as large as 18%, of which the largest part is located in the plastic domain of the metal. The tensile Young's modulus of the metal $E_t$ metal is reduced considerably in the plastic domain. In contrast herewith, most fibrous composites, largely due to the fibers, typically show almost elastic behavior up to failure. However, fibers can show similar stress strain behaviour as metals as shown in figure 8 for a fiber. This phenomenon can occur more often in the compressive range of the fiber. In case the fiber has an elastic-plastic behavior the ultimate elastic strain ($\varepsilon_{\text{ultimate elastic tension}}$ & $\varepsilon_{\text{ultimate elastic compression}}$) is shown in figure 8.

The fiber properties of equations (1) to (3) are determined according to ASTM norms.

More specifically, the ultimate elastic strain in tension, as well as the Young's modulus of the fiber in tension are determined on fiber samples in accordance with ASTM D2101. The ultimate elastic strain in compression is determined on unidirectional composites according to ASTM D-695. The ultimate elastic strains will be determined with the strain at the yield strength determined by the off-set as mentioned by the ASTM methods. The associated strain is referred to in Fig. 8 as $\varepsilon_{\text{yield tension}}$ & $\varepsilon_{\text{yield compression}}$ respectively. The ultimate elastic strains, $\varepsilon_{\text{ultimate elastic tension}}$ & $\varepsilon_{\text{ultimate elastic compression}}$ will be:

$$\varepsilon_{\text{ultimate elastic tension}} = \varepsilon_{\text{yield tension}} - \varepsilon_{\text{off-set}}$$

$$\varepsilon_{\text{ultimate elastic compression}} = \varepsilon_{\text{yield compression}} - \varepsilon_{\text{off-set}}$$

For metal the off-set is most often taken at $\varepsilon_{\text{off-set}}$ = 0.2%. Since composites most often have a very low strain to failure, particularly in compression, the off-set should be taken less than the 0.2%, most preferably equal or less than 0.1%. The large difference in mechanical behavior between metals and composite reinforcing fibers has a significant effect on stress concentrations in real life structures. The invention is based on the insight that it is important to match the constituent material properties in view of allowable strain concentrations, and not stress concentrations.

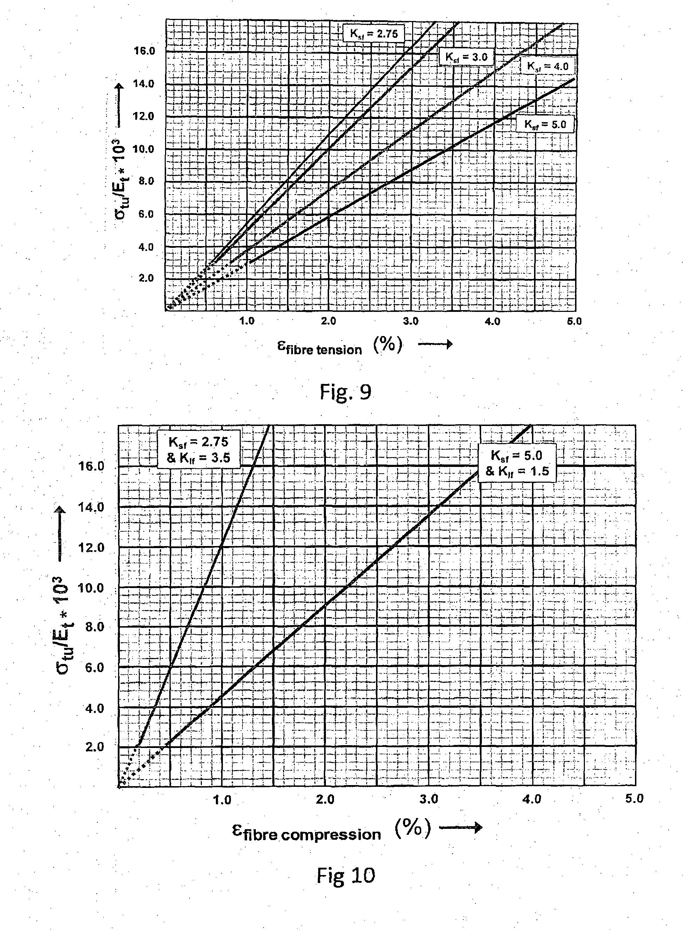

The ensuing relation between the required minimum elastic tension strain of the fiber in a fiber-metal laminate of the present invention and the properties of the metal used (equation (1)) is graphically depicted in figure 9 for different values of the strain concentration factor $K_{sf}$. Fiber-metal laminates according to the invention use fibers with an ultimate elastic tension strain lying on and between the lines $K_{sf}$ = 2.75 and $K_{sf}$ = 5.0. Although the optimal relations in principle hold for any metal properties, a lower limit for the metal properties is preferably set for practical reasons. A preferred lower limit for the parameter $\sigma_{tu}/E_t$ is 0,003. Below a value of 0,003 the properties of the metal and fiber in de fiber-metal laminate will be too low. Hatched lines have been used in figure 9 for this non-preferred area.

The ensuing relation between the required minimum elastic compression strain of the fiber in a fiber-metal laminate of the present invention and the properties of the metal used (equation (3)) is graphically depicted in figure 10 for different values of the strain concentration factor $K_{sf}$ and load factor $Kl_f$. Fiber-metal laminates according to the invention use fibers with an ultimate elastic compression strain lying on and between the lines $K_{sf}$ = 2.75 with $K_{lf}$ = 3.5 and $K_{sf}$ = 5.0 with $K_{lf}$ = 1.5. Although the optimal relations in principle hold for any metal properties, a lower limit for the metal properties is preferably set for practical reasons. A preferred lower limit for the parameter $\sigma_{tu}/E_t$ is 0,002. Below a value of 0,002 the properties of the metal and fiber in de fiber-metal laminate will be too low. Hatched lines have been used in figure 10 for this non-preferred area.

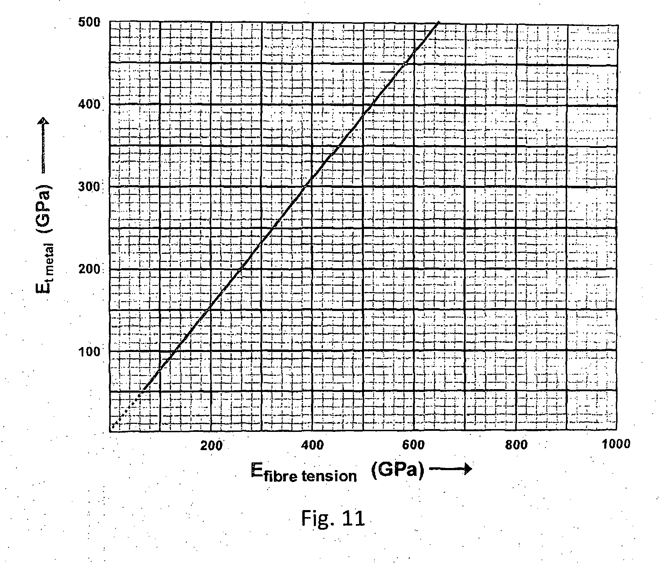

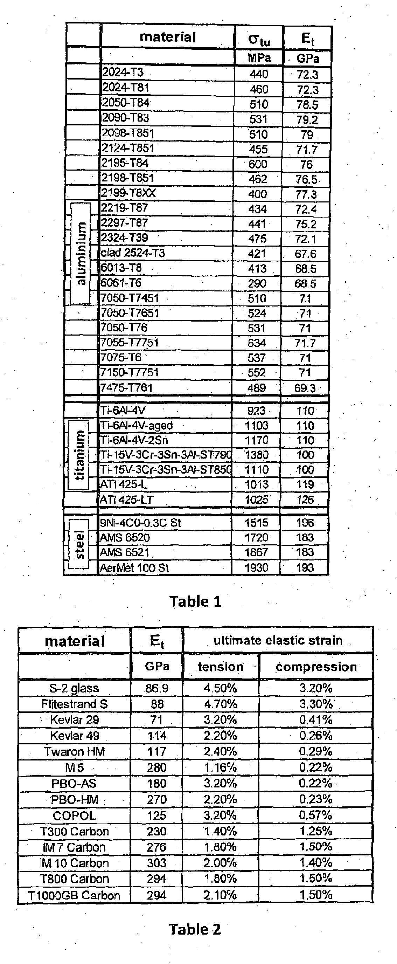

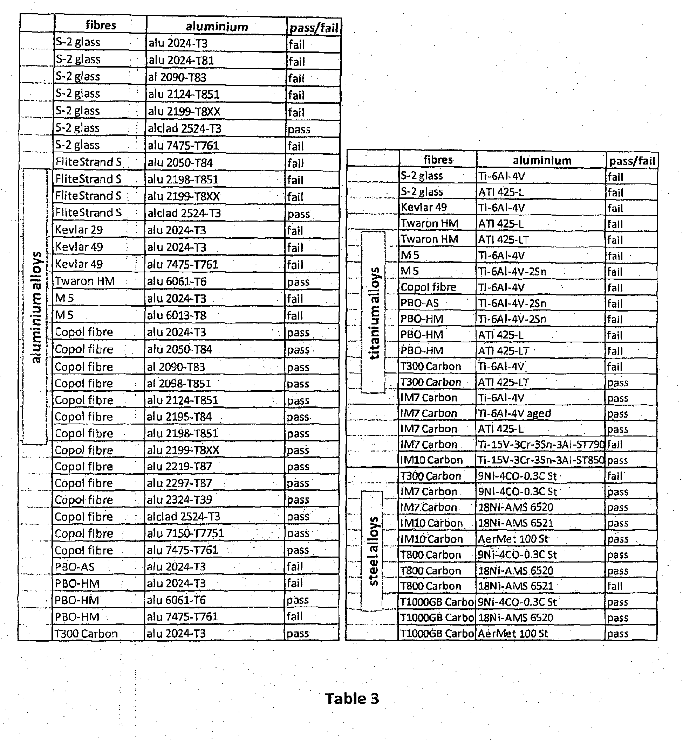

The ensuing relation between the required minimum modulus of the fiber in a fiber-metal laminate of the present invention and the modulus of the metal used (equation (2)) is graphically depicted in figure 11 for a value of the stiffness concentration factor $K_{stiff}$ = 1.28. Fiber-metal laminates according to the invention use fibers with a tensile elastic modulus lying on and right of the line. A non-preferred area has metal modulus below 50 GPa, as shown by the hatched line in Figure 11.

The fiber-reinforced composite layers in the fiber-metal laminates according to the invention are light and strong and comprise reinforcing fibers embedded in a polymer. The polymer may also act as a bonding means between the various layers. Reinforcing fibers that are suitable for use in the fiber-reinforced composite layers depend on the choice of metal in the metal sheets (see equations (1) to (3)) but may include glass fibers, carbon fibers, copolymer fibres and metal fibers and/or combinations of the above fibers. Preferred fibers include reinforcing fibers with a relatively high tensile strength and/or stiffness, of which class high modulus fibers, such as ultra high stiff glass fibers, Co-polymer fibers and carbon fibers, are particularly preferred. Preferred reinforcing fibers include carbon fibers. Particularly preferred fiber-metal laminates comprise fiber-reinforced composite layers comprising T1000 and/or IM10 carbon fibers.

Examples of suitable matrix materials for the reinforcing fibers include but are not limited to thermoplastic polymers such as polyamides, polyimides, polyethersulphones, polyetheretherketone, polyurethanes, polyphenylene sulphides (PPS), polyamideimides, polycarbonate, polyphenylene oxide blend (PPO), as well as mixtures and copolymers of one or more of the above polymers. Suitable matrix materials also comprise thermosetting polymers such as epoxies, unsaturated polyester resins, melamine/formaldehyde resins, phenol/formaldehyde resins, polyurethanes, of which thermosetting polymers epoxies are most preferred. The fibrous composites typically comprise from 25% to 60% by volume of fibers.

In the laminate according to the invention, the fiber-reinforced composite layer preferably comprises substantially continuous fibers that extend in multiple directions, like 0°, 90° and under angles symmetrically with respect to the rolling direction of the metal, more preferably in two almost orthogonal directions (for instance cross-ply or isotropic woven fabrics). However it is more preferable for the fiber-reinforced composite layer to comprise substantially continuous fibers that mainly extend in one direction (so called UD material). It is advantageous to use the fiber-reinforced composite layer in the form of a pre-impregnated semi-finished product. Such a "prepreg" shows generally good mechanical properties after curing thereof, among other reasons because the fibers have already been wetted in advance by the matrix polymer.

Fiber-metal laminates may be obtained by connecting a number of metal sheets and fiber-reinforced composite layers to each other by means of heating under pressure and subsequent cooling. The fiber-metal laminates of the invention have good specific mechanical properties (properties per unit of density). Metals that are particularly appropriate to use include steel (alloys) and light metals, such as aluminum alloys and in particular titanium alloys. Suitable aluminum alloys are based on alloying elements such as copper, zinc, magnesium, silicon, manganese, and lithium. Small quantities of chromium, titanium, scandium, zirconium, lead, bismuth and nickel may also be added, as well as iron. Suitable aluminum alloys include aluminum copper alloys (2xxx series), aluminum magnesium alloys (5xxx series), aluminum silicon magnesium alloys (6xxx series), aluminum zinc magnesium alloys (7xxx series), aluminum lithium alloys (2xxx, 8xxx series), as well as aluminum magnesium scandium alloys. Suitable titanium alloys include but are not limited to alloys comprising Ti-15V-3Cr-3Al-3Sn, Ti-15Mo-3Al-3Nb, Ti-3Al-8V-6Cr-4Zr-4Mo, Ti-13V-11Cr-3Al, Ti-6Al-4V and Ti-6Al-4V-2Sn. In other respects, the invention is not restricted to laminates using these metals, so that if desired other metals, for example steel or another suitable structural metal can be used. The laminate of the invention may also comprise metal sheets of different alloys.

Although applying thinner metal sheets per se leads to higher costs and is therefore not naturally obvious, it turns out that applying them in the laminate leads to an improvement in the properties of the laminate. The laminate according to the invention is additionally advantageous in that only a few metal sheets have to be applied in the laminate to be sufficient to achieve these improved properties. The same advantages are achieved if the thickness of the prepreg in the fiber-reinforced composite layers in the laminate is less than 0.8 mm, and preferably inclusive between 0.1 and 0.6 mm.

A fiber-metal laminate according to the invention will generally be formed by a number of metal sheets and a number of fiber-reinforced composite layers, with the proviso that the properties of the fibers used in the fiber-reinforced composite layers satisfy equations (1) to (6).

The outer layers of the fiber-metal laminate may comprise metal sheets and/or fiber-reinforced composite layers. The number of metal layers may be varied over a large range and is at least one. In a particularly preferred fiber-metal laminate, the number of metal layers is two, three or four, between each of which fiber-reinforced composite layers have preferably been applied. Depending on the intended use and requirements set, the optimum number of metal sheets can easily be determined by the person skilled in the art. The total number of metal sheets will generally not exceed 40, although the invention is not restricted to laminates with a maximum number of metal layers such as this. According to the invention, the number of metal sheets is preferably between 1 and 30, and more preferably between 1 and 10, with the metal sheets preferably having a tensile ultimate strength of at least 0.25 GPa.

To prevent the laminate from warping as a result of internal tensions, the laminate according to the invention can be structured symmetrically with respect to a plane through the center of the thickness of the laminate.

Fiber-metal laminate configurations according to the invention are readily obtained by arranging (alternating) layers of fiber-reinforced composite, preferably using prepregs, and at least one metal sheet. The fiber-metal laminates can be designed in many different arrangements.

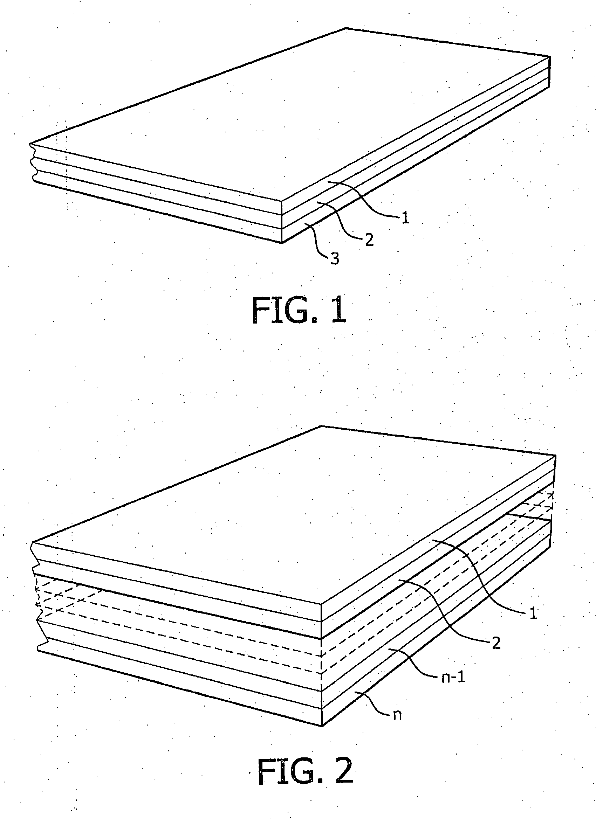

With reference to figure 1, a fiber-metal laminate according to one embodiment is shown, wherein the total number of layers is 3, and wherein layer 1 and layer 3 comprise a metal layer and layer 2 a fibrous composite layer. Alternatively, layer 1 and layer 3 comprise a fibrous composite layer and layer 2 is a metal layer. Layer 1 and layer 3 can comprise the same metal or may be a different kind of metal. The fibrous composite layer(s) may contain fibers in multiple directions as well as different kind of fibers for which at least one of the fiber types in at least one of the fibrous composite layer(s) fulfills the requirements set in equations (1) to (6) with respect to at least one of the metal layers. It should be noticed that the outside dimensions of the layers 1 to 3 are not necessarily the same. For instance layer 3 and layer 2 can have the same dimension, whereby the dimensions of layer 1 are larger. This can, for instance, be the case for a large metal sheet with a local reinforcement (layer 2 as composite layer and layer 3 as metal layer).

With reference to figure 2, a fiber-metal laminate according to another embodiment is shown, wherein the total number of layers is n, and wherein layer 1 is a metal layer and layer 2 is a fibrous composite layer, which will be alternating until layer n-1 and layer n. Alternatively, layer 1 is a fibrous composite layer and layer 2 is a metal layer, which will be alternating until layer n-1 and layer n. The alternating metal layers can be of the same metal or be a different kind of metal. Also, at least one of the alternating fibrous composite layers may contain fibers in multiple directions as well as different kind of fibers, for which at least one of the fiber types in at least one of the fibrous composite layer fulfills the requirements set in equations (1) to (6) with respect to the adjacent metal layer, which is farthest away from the centerline of the laminate. In case the outer layer of the laminate is a fibrous composite layer, this layer preferably needs to fulfill the requirements set in equations (1) to (6) with respect to its adjacent metal layer. It should be noticed that the outside dimensions of the layers 1 to n are not necessarily the same.

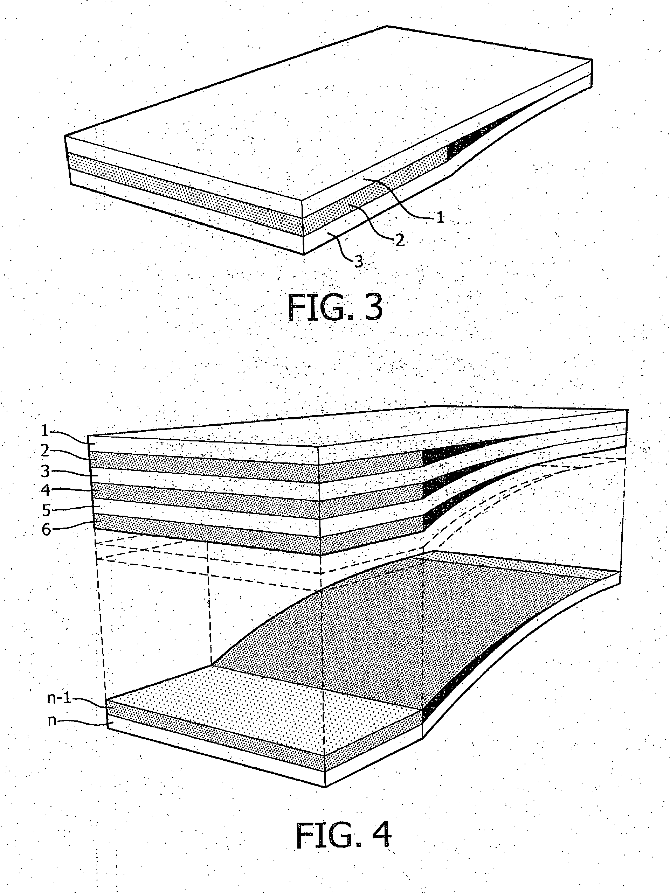

With reference to figure 3, yet another embodiment of the fiber-metal laminate according to the invention is shown. In the embodiment shown, layer 1 and layer 3 are a metal layer and layer 2 is a fibrous composite layer or, alternatively, layer 1 and layer 3 are a fibrous composite layer and layer 2 is a metal layer. Layer 1 and 3 can be the same metal or be a different kind of metal. The fibrous composite layer(s) may contain fibers in multiple directions as well as different kind of fibers for which at least one of the fiber types in at least one of the fibrous composite layers fulfills the requirements set in equations (1) to (6). Also layer 1, 2 and/or 3 can be a laminate according to fig.1 or 2 with respect to at least one of the metal layers. It should be noticed that the outside dimensions of the layers 1 to 3 are not necessarily the same.

With reference to figure 4, yet another embodiment of the fiber-metal laminate according to the invention is shown. In this embodiment, layer 1 is a metal layer and layer 2 is a composite layer, which will be alternating until layer n-1 and layer n or, alternatively, layer 1 is a composite layer and layer 2 is a metal layer, which will be alternating until layer n-1 and layer n. The alternating metal layers can be of the same metal or be a different kind of metal, and at least one of the alternating composite layers may contain fibers in multiple directions as well as different kind of fibers, for which at least one of the fiber types in one of the composite layer(s) fulfills the requirements set with respect to the adjacent metal layer which is farthest away from the centerline of the laminate. In case the outer layer of the laminate is a fibrous composite layer, this layer needs to fulfill the requirements set in equations (1) to (6) with respect to its adjacent metal layer. As shown in figure 4, the number of fiber-reinforced composite layers and/or metal sheets varies between cross-sections. Assuming the metal sheets are the white layers, and the fibrous composite layers are the darker layers, the number of fibrous composite layers varies from (n-1)/2 layers in a cross-section at the left of the figure to zero in a cross-section at the right of the figure (the fibrous composite layers are interrupted), which results in a fiber-metal laminate with a varying, i.e. a tapered thickness. Also layer 1, 2 and/or 3 can be a laminate according to fig.1 or 2 It should be noticed that the outside dimensions of the layers 1 to n are not necessarily the same.

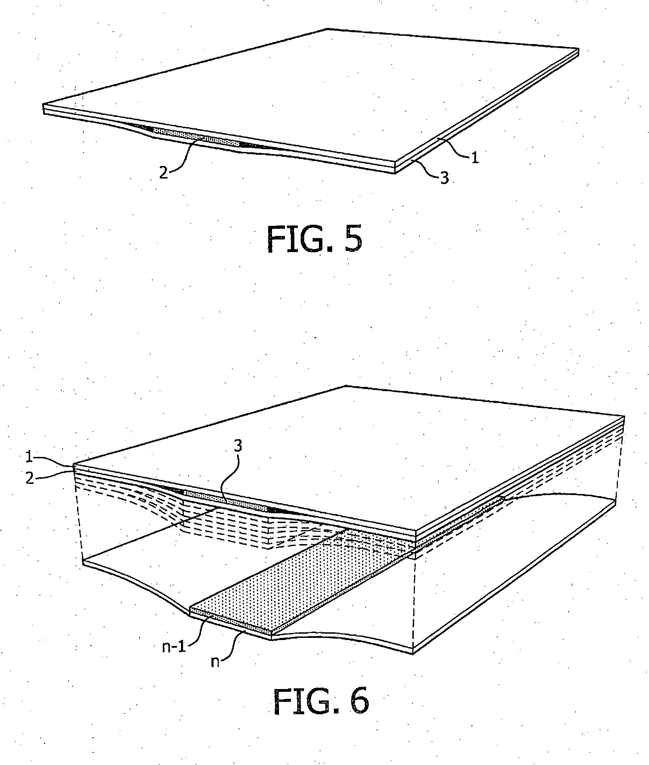

With reference to figure 5, still another embodiment of the fiber-metal laminate according to the present invention is shown, in which layer 1 and layer 3 are a metal layer and layer 2 is a fibrous composite layer or, alternatively, layer 1 and layer 3 are a fibrous composite layer and layer 2 is a metal layer, in which layer 1 and 3 can be the same metal or be a different kind of metal, and in which the fibrous composite layer(s) may contain fibers in multiple directions as well as different kind of fibers for which at least one of the fiber types in one of the fibrous composite layer(s) fulfills the requirements set in equations (1) to (6). Also layer 1, 2 and/or 3 can be a laminate according to fig. 1 or 2

With reference to figure 6, yet another embodiment of the fiber-metal laminate according to the present invention is shown, in which layer 1 is a metal layer and layer 2 is a composite layer, which will be alternating until layer n-1 and layer n. Alternatively, layer 1 is a composite layer and layer 2 is a metal layer, which will be alternating until layer n-1 and layer n. The alternating metal layer can be of the same metal or be a different kind of metal, and at least one of the alternating composite layers may contain fibers in multiple directions as well as different kind of fibers, for which at least one of the fiber types in one of the composite layer(s) fulfills the requirements set in equations (1) to (6) with respect to the adjacent metal layer, which is farthest away from the centerline of the laminate. In case the outer layer of the laminate is a fibrous composite layer, this layer needs to fulfill the requirements set in equations (1) to (6) with respect to its adjacent metal layer. Also layer 1, 2 and/or 3 can be a laminate according to fig.1 or 2

The laminates are produced by preparing a stack of fibrous composite and metal sheets in the sequence as exemplified in figures 1 to 6, for example on a flat or curved mold. After lamination, the overall structure is cured at a temperature suitable for the matrix resin, preferably an epoxy or thermoplastic resin, for instance in an autoclave, and preferably under vacuum in order to expel entrapped air from the laminate. For most applications, an epoxy or thermoplastic resin with a high glass transition temperature will be most suitable. Any epoxy resin may be used however. Epoxy resins are generally cured at or slightly above room temperature, at a temperature of approximately 125°C or at a temperature of approximately 175°C. After curing under pressure a consolidated laminate is obtained. As mentioned above, it is also possible to use a thermoplastic resin.

## EXAMPLES AND COMPARATIVE EXAMPLES

The invention will be illustrated by several Examples, whereby the properties of Table 1 & 2 have been used. The Examples are shown in Table 3, whereby $K_{sf} = 2.75$, $K_{stiff} = 1.28$ and $K_{lf} = 3.5$ is applied.

Table 3 clearly shows that known laminates like GLARE (aluminium 2024-T3 or 7475-T761 with S2-glass fibers), ARALL (aluminium 2024-T3 or 7475-T761 with original Kevlar fibers)and Ti-Gr (Ti-6Al-4V and T300 carbon fibres) do riot fulfill the requirements set forth in this invention. It also shows clearly that fiber metal laminates with new fibers like Copol fibres in relation with aluminium alloy are according to the invention.

The invention underlines the importance of fiber stiffness, especially for laminates with glass fibers. Furthermore, it underlines the importance of elastic compressive strain for almost all other fibers.

The fiber-metal laminate according to the present invention is advantageously used in constructing load bearing structures, such as aircraft structures. It is also advantageously used in an assembly with a further element, the further element being bonded to the fiber-metal laminate by a bonding layer, comprising an adhesive and/or a fiber-reinforced composite. The further element may comprise an aircraft (sub)structure, such as a flat or curved doubler; a stiffener, such as an angle section, Z-stringer, hat stringer, C-stringer, Y-stringer; a spar(section), rib(section), shear-cleat and/or frame(section).

## Claims

1. A fiber-metal laminate comprising mutually bonded fiber-reinforced composite layers and metal sheets, **characterized in that** the fiber and metal properties in at least one combination of a fiber-reinforced composite layer and an adjacent metal sheet, satisfy the following relationships simultaneously:

$$\varepsilon_{\text{fibre tension}} > K_{sf} * \sigma_{tu} / (1.5 * E_{t \text{ metal}}) \tag{1}$$

$$E_{\text{fibre tension}} > K_{stiff} * E_{t \text{ metal}} \tag{2}$$

$$\varepsilon_{\text{fibre compression}} > K_{sf} * \sigma_{tu} / (1.5 * K_{lf} * E_{t \text{ metal}}) \tag{3}$$

wherein the strain concentration factor $K_{sf}$, the stiffness factor $K_{stiff}$ and the load factor $K_{lf}$ satisfy

$$2.75 \leq K_{sf} < 5.7 \tag{4}$$

$$K_{stiff} \geq 1.28 \tag{5}$$

$$1.5 \leq K_{lf} \leq 3.5 \tag{6}$$

and

$\sigma_{tu}$ = ultimate tensile strength of the metal
$E_t$ metal = tensile Young's modulus of the metal
$\varepsilon_{\text{fibre}}$ tension = elastic tensile strain of the fiber
$E_{\text{fibre}}$ tension = tensile elastic modulus of the fibre
$\varepsilon_{\text{fibre compression}}$ = elastic compression strain of the fiber according to ASTM D-bg5.

2. Fiber Metal laminate according to claim 1, whereby the load factor $K_{lf}$ is chosen such that $1.5 \leq K_{lf} \leq 2.5$.

3. Fiber-metal laminate according to any one of the previous claims, wherein the strain concentration factor $K_{sf}$ is chosen such that $3.0 < K_{sf} < 5.0$ is satisfied.

4. Fiber-metal laminate according to any one of the previous claims, wherein the stiffness factor $K_{stiff}$ is chosen such that $K_{stiff} \geq 1.34$ is satisfied.

5. Fiber-metal laminate according to any one of the preceding claims, wherein the fraction of fibers that satisfy the relationships (1) to (6) is at least 25% by volume of the total volume of the fiber-reinforced composite layers, more preferably at least 30% by volume of the total volume of the fiber-reinforced composite layers, and most preferably $0.35 < V_f < 0.6$.

6. Fiber-metal laminate according to any one of the preceding claims, wherein the fraction of metal MVF that satisfies the relationships (1) to (6) is > 48% by volume of the total volume of the metal layers, more preferably > 52% and most preferably > 58%.

7. Fiber-metal laminate according to anyone of the preceding claims, wherein the fiber and metal properties for all fiber-reinforced composite layers and metal sheets satisfy the relationships (1) to (6).

8. Fiber-metal laminate according to anyone of the preceding claims, wherein at least one of the metal layers comprises an aluminum alloy with a stiffness of $E_t$ metal > 70GPa, more preferably > 75 GPa.

9. Fiber-metal laminate according to anyone of the preceding claims, wherein the fiber-reinforced composite layers comprise ultra high stiffness glass fibers with a tensile elastic modulus $E_{t\,fiber} > 92.5$ GPa, and preferably $E_{t\,fiber} > 100$ GPa.

10. Fiber-metal laminates according to anyone of the preceding claims, wherein at least one fiber reinforced composite layers comprise substantially continuous fibers that extend mainly in one direction.

11. Fiber-metal laminates according to anyone of the preceding claims, wherein at least one fiber reinforced composite layers comprise substantially continuous fibers that extend in multiple directions, and more preferred mainly in two perpendicular directions.

12. Assembly of a fiber-metal laminate according to anyone of the preceding claims and a further element, the further element being bonded to the fiber-metal laminate by a bonding layer, comprising an adhesive and/or a fiber-reinforced composite, or being connected by mechanical fastening means.

13. Assembly according to claim 12, wherein the further element comprises a flat or tapered plate from a metal, such as an aluminum alloy, titanium alloy, steel alloy and/or a combination of metal sheets and fiber composite layers.

14. An aircraft structural primary part, such as a fuselage, wing and/or tail plane, comprising at at least one location a fiber-metal laminate according to one of claims 1-11.

15. Part according to claim 14, comprising at least one aluminium lithium sheet.


**Patentansprüche**

1. Fiber-Metall-Laminat mit gegenseitig verbundenen fiberverstärkten Verbundschichten und Metallschichten, **dadurch gekennzeichnet, dass** die Fiber- und Metalleigenschaften in zumindest einer Kombination einer fiberverstärkten Verbundschicht und einer angrenzenden Metallschicht gleichzeitig die folgenden Beziehungen erfüllen:

$$\varepsilon_{fibre\ tension} > K_{sf}*\sigma_{tu}/(1{,}5*E_{t\ metal}) \qquad (1)$$

$$E_{fibre\ tension} > K_{stiff}*E_{t\ metal} \qquad (2)$$

$$\varepsilon_{fibre\ compression} > K_{sf}*\sigma_{tu}/(1{,}5*K_{lf}*E_{t\ metal}) \qquad (3)$$

wobei der Dehnung-Konzentrationsfaktor $K_{sf}$, der Steifigkeitsfaktor $K_{stiff}$ und der Lastfaktor $K_{lf}$

$$2{,}75 \leq K_{sf} < 5{,}7 \qquad (4)$$

$$K_{stiff} \geq 1{,}28 \qquad (5)$$

$$1{,}5 \leq K_{lf} \leq 3{,}5 \qquad (6)$$

erfüllen, und

$\sigma_{tu}$= ultimative Zugfestigkeit des Metalls
$E_{t\ metal}$= Zug-Elastizitätsmodul des Metalls
$\varepsilon_{fibre}$ tension= Elastizität-Zugdehnung der Fiber

$E_{fibre\ tension}$ = Zug-Elastizitätsmodul

$\varepsilon_{fibre\ compression}$ = elastische Kompressionsdehnung der Fiber gemäß ASTM D-b95.

2. Fiber-Metall-Laminat nach Anspruch 1, wobei der Lastfaktor $K_{lf}$ derart ausgewählt ist, dass $1,5 \leq K_{lf} \leq 2,5$.

3. Fiber-Metall-Laminat nach einem der vorstehenden Ansprüche, wobei der Dehnung-Konzentrationsfaktor $K_{sf}$ derart ausgewählt ist, dass $3,0 < K_{sf} < 5,0$ erfüllt ist.

4. Fiber-Metall-Laminat nach einem der vorstehenden Ansprüche, wobei der Steifigkeitsfaktor $K_{stiff}$ derart ausgewählt ist, dass $K_{stiff} \geq 1,34$ erfüllt ist.

5. Fiber-Metall-Laminat nach einem der vorstehenden Ansprüche, wobei der Anteil von Fibern, die die Beziehungen (1) bis (6) erfüllen, zumindest 25% des Volumens des Gesamtvolumens der fiberverstärkten Verbundschichten beträgt, weiter vorzuziehen zumindest 30% des Volumens des Gesamtvolumens der fiberverstärkten Verbundschichten und insbesondere vorzuziehen $0,35 < V_f < 0,6$.

6. Fiber-Metall-Laminat nach einem der vorstehenden Ansprüche, wobei der Anteil von Metall MVF, das die Beziehungen (1) bis (6) erfüllt, >48% des Volumens des Gesamtvolumens der Metallschichten ist, vorzugsweise >52% und insbesondere vorzuziehen >58%.

7. Fiber-Metall-Laminat nach einem der vorstehenden Ansprüche, wobei die Fiber- und Metalleigenschaften für alle fiberverstärkten Verbundschichten und Metallschichten die Beziehungen (1) bis (6) erfüllen.

8. Fiber-Metall-Laminat nach einem der vorstehenden Ansprüche, wobei zumindest eine der Metallschichten einer Aluminiumlegierung mit einer Steifigkeit von $E_{t\ metal}$ > 70GPa, weiter vorzuziehen >75GPa aufweist.

9. Fiber-Metall-Laminat nach einem der vorstehenden Ansprüche, wobei die fiberverstärkten Verbundschichten ultrahochsteife Glasfibern mit einem Zug-Elastizitätsmodul $E_{t\ fiber}$ >92,5GPa und vorzugsweise $E_{t\ fiber}$ >100GPa aufweist.

10. Fiber-Metall-Laminat nach einem der vorstehenden Ansprüche, wobei zumindest eine fiberverstärkte Verbundschicht im Wesentlichen kontinuierliche Fibern aufweist, die sich hauptsächlich in einer Richtung erstrecken.

11. Fiber-Metall-Laminat nach einem der vorstehenden Ansprüche, wobei zumindest eine fiberverstärkte Verbundschicht im Wesentlichen kontinuierliche Fibern aufweist, die sich in mehrere Richtungen erstrecken und vorzugsweise in zwei senkrechte Richtungen.

12. Anordnung eines Fiber-Metall-Laminat nach einem der vorstehenden Ansprüche und eines weiteren Elements, wobei das weitere Element mit dem Fiber-Metall-Laminat über eine Verbindungsschicht verbunden ist, die ein klebendes und/oder ein fiberverstärktes Komposit aufweist oder mittels mechanischer Befestigungsmittel verbunden ist.

13. Anordnung nach Anspruch 12, wobei das weitere Element eine flache oder abgeschrägte Platte aus einem Metall wie einer Aluminiumlegierung, einer Titanlegierung, Stahllegierung und/oder einer Kombination von Metallschichten und Fiber-Verbundschichten aufweist.

14. Primärteil für eine Flugzeugstruktur wie ein Rumpf und/oder Leitwerk mit einem Fiber-Metall-Laminat gemäß einem der Ansprüche 1-11 an zumindest einem Ort.

15. Teil nach Anspruch 14 mit zumindest einer Aluminium-Lithium-Schicht.

**Revendications**

1. Stratifié fibres-métal comprenant des couches composites renforcées par des fibres et des feuilles de métal mutuellement liées, **caractérisé en ce que** les propriétés des fibres et du métal dans au moins une combinaison d'une couche composite renforcée par des fibres et d'une feuille de métal adjacente, satisfont les relations suivantes simultanément :

$$\varepsilon_{\text{fibre tension}} > K_{sf} * \sigma_{tu}/(1{,}5 * E_{t\ metal}) \tag{1}$$

$$E_{\text{fibre tension}} > K_{stiff} * E_{t\ metal} \tag{2}$$

$$\varepsilon_{\text{fibre compression}} > K_{sf} * \sigma_{tu}/(1{,}5 * K_{lf} * E_{t\ metal}) \tag{3}$$

dans lesquelles le facteur de concentration d'effort $K_{sf}$, le facteur de raideur $K_{stiff}$ et le facteur de charge $K_{lf}$ satisfont :

$$2{,}75 \leq K_{sf} \leq 5{,}7 \tag{4}$$

$$K_{stiff} \geq 1{,}28 \tag{5}$$

$$1{,}5 \leq K_{lf} \leq 3{,}5 \tag{6}$$

et

$\sigma_{tu}$ = résistance à la traction du métal
$E_{t\ metal}$ = module de Young en traction du métal
$\varepsilon_{\text{fibre}}$ tension = effort de traction élastique de la fibre
$E_{\text{fibre}}$ tension = module d'élasticité en traction de la fibre
$\varepsilon_{\text{fibre}}$ compression = effort de compression élastique de la fibre selon la norme ASTM D-695.

2. Stratifié fibres-métal selon la revendication 1, selon lequel le facteur de charge $K_{lf}$ est choisi de sorte que $1{,}5 \leq K_{lf} \leq 2{,}5$.

3. Stratifié fibres-métal selon l'une quelconque des revendications précédentes, dans lequel le facteur de concentration d'effort $K_{sf}$ est choisi de sorte que $3{,}0 < K_{sf} < 5{,}0$ est satisfait.

4. Stratifié fibres-métal selon l'une quelconque des revendications précédentes, dans lequel le facteur de raideur $K_{stiff}$ est choisi de sorte que $K_{stiff} \geq 1{,}34$ est satisfait.

5. Stratifié fibres-métal selon l'une quelconque des revendications précédentes, dans lequel la fraction de fibres qui satisfont les relations (1) à (6) est d'au moins 25 % en volume du volume total des couches composites renforcées par des fibres, de manière davantage préférée d'au moins 30 % en volume du volume total des couches composites renforcées par des fibres et de manière préférée entre toutes $0{,}35 < V_f < 0{,}6$.

6. Stratifié fibres-métal selon l'une quelconque des revendications précédentes, dans lequel la fraction de métal MVF qui satisfait les relations (1) à (6) est > 48 % en volume du volume total des couches de métal, de manière davantage préférée > 52 % et de manière préférée entre toutes > 58 %.

7. Stratifié fibres-métal selon l'une quelconque des revendications précédentes, dans lequel les propriétés de fibres et de métal de toutes les couches composites renforcées par des fibres et des feuilles de métal satisfont les relations (1) à (6).

8. Stratifié fibres-métal selon l'une quelconque des revendications précédentes, dans lequel au moins l'une des couches de métal comprend un alliage d'aluminium ayant une raideur de $E_{f\ metal} > 70$ GPa, de manière davantage préférée > 75 GPa.

9.  Stratifié fibres-métal selon l'une quelconque des revendications précédentes, dans lequel les couches composites renforcées par des fibres comprennent des fibres de verre ayant une raideur très élevée présentant un module d'élasticité en traction $E_{t\,fiber}$ > 92,5 GPa, et de préférence $E_{t\,fiber}$ > 100 GPa.

10. Stratifié fibres-métal selon l'une quelconque des revendications précédentes, dans lequel au moins une couche composite renforcée par des fibres comprend des fibres sensiblement continues qui s'étendent principalement dans une direction.

11. Stratifié fibres-métal selon l'une quelconque des revendications précédentes, dans lequel au moins une couche composite renforcée par des fibres comprend des fibres sensiblement continues qui s'étendent dans de multiples directions, et de manière davantage préférée principalement dans deux directions perpendiculaires.

12. Assemblage d'un stratifié fibres-métal selon l'une quelconque des revendications précédentes et d'un élément supplémentaire, l'élément supplémentaire étant lié au stratifié fibres-métal par une couche de liaison, comprenant un adhésif et/ou un composite renforcé par des fibres, ou étant raccordé par des moyens de fixation mécaniques.

13. Assemblage selon la revendication 12, dans lequel l'élément supplémentaire comprend une plaque plate ou effilée constituée d'un métal, tel qu'un alliage d'aluminium, un alliage de titane, un alliage d'acier et/ou une combinaison de feuilles de métal et de couches composites de fibres.

14. Pièce primaire structurelle d'aéronef, telle qu'un fuselage, une aile et/ou un stabilisateur, comprenant en au moins un emplacement un stratifié fibres-métal selon l'une quelconque des revendications 1 à 11.

15. Pièce selon la revendication 14, comprenant au moins une feuille d'aluminium-lithium.

FIG. 1

FIG. 2

FIG. 3

FIG. 4

FIG. 5

FIG. 6

Fig. 7

Fig. 8

Fig. 9

Fig 10

Fig. 11

| | material | $\sigma_{tu}$ | $E_t$ |
|---|---|---|---|
| | | MPa | GPa |
| | 2024-T3 | 440 | 72.3 |
| | 2024-T81 | 460 | 72.3 |
| | 2050-T84 | 510 | 76.5 |
| | 2090-T83 | 531 | 79.2 |
| | 2098-T851 | 510 | 79 |
| | 2124-T851 | 455 | 71.7 |
| | 2195-T84 | 600 | 76 |
| | 2198-T851 | 462 | 76.5 |
| | 2199-T8XX | 400 | 77.3 |
| aluminium | 2219-T87 | 434 | 72.4 |
| | 2297-T87 | 441 | 75.2 |
| | 2324-T39 | 475 | 72.1 |
| | clad 2524-T3 | 421 | 67.6 |
| | 6013-T8 | 413 | 68.5 |
| | 6061-T6 | 290 | 68.5 |
| | 7050-T7451 | 510 | 71 |
| | 7050-T7651 | 524 | 71 |
| | 7050-T76 | 531 | 71 |
| | 7055-T7751 | 634 | 71.7 |
| | 7075-T6 | 537 | 71 |
| | 7150-T7751 | 552 | 71 |
| | 7475-T761 | 489 | 69.3 |
| | | | |
| | Ti-6Al-4V | 923 | 110 |
| titanium | Ti-6Al-4V-aged | 1103 | 110 |
| | Ti-6Al-4V-2Sn | 1170 | 110 |
| | Ti-15V-3Cr-3Sn-3Al-ST790 | 1380 | 100 |
| | Ti-15V-3Cr-3Sn-3Al-ST850 | 1110 | 100 |
| | ATI 425-L | 1013 | 119 |
| | ATI 425-LT | 1025 | 126 |
| | | | |
| steel | 9Ni-4C0-0.3C St | 1515 | 196 |
| | AMS 6520 | 1720 | 183 |
| | AMS 6521 | 1867 | 183 |
| | AerMet 100 St | 1930 | 193 |

### Table 1

| material | $E_t$ | ultimate elastic strain | |
|---|---|---|---|
| | GPa | tension | compression |
| S-2 glass | 86.9 | 4.50% | 3.20% |
| Flitestrand S | 88 | 4.70% | 3.30% |
| Kevlar 29 | 71 | 3.20% | 0.41% |
| Kevlar 49 | 114 | 2.20% | 0.26% |
| Twaron HM | 117 | 2.40% | 0.29% |
| M5 | 280 | 1.16% | 0.22% |
| PBO-AS | 180 | 3.20% | 0.22% |
| PBO-HM | 270 | 2.20% | 0.23% |
| COPOL | 125 | 3.20% | 0.57% |
| T300 Carbon | 230 | 1.40% | 1.25% |
| IM 7 Carbon | 276 | 1.80% | 1.50% |
| IM 10 Carbon | 303 | 2.00% | 1.40% |
| T800 Carbon | 294 | 1.80% | 1.50% |
| T1000GB Carbon | 294 | 2.10% | 1.50% |

### Table 2

| | fibres | aluminium | pass/fail |
|---|---|---|---|
| | S-2 glass | alu 2024-T3 | fail |
| | S-2 glass | alu 2024-T81 | fail |
| | S-2 glass | al 2090-T83 | fail |
| | S-2 glass | alu 2124-T851 | fail |
| | S-2 glass | alu 2199-T8XX | fail |
| | S-2 glass | alclad 2524-T3 | pass |
| | S-2 glass | alu 7475-T761 | fail |
| | FliteStrand S | alu 2050-T84 | fail |
| | FliteStrand S | alu 2198-T851 | fail |
| | FliteStrand S | alu 2199-T8XX | fail |
| | FliteStrand S | alclad 2524-T3 | pass |
| | Kevlar 29 | alu 2024-T3 | fail |
| | Kevlar 49 | alu 2024-T3 | fail |
| aluminium alloys | Kevlar 49 | alu 7475-T761 | fail |
| | Twaron HM | alu 6061-T6 | pass |
| | M5 | alu 2024-T3 | fail |
| | M5 | alu 6013-T8 | fail |
| | Copol fibre | alu 2024-T3 | pass |
| | Copol fibre | alu 2050-T84 | pass |
| | Copol fibre | al 2090-T83 | pass |
| | Copol fibre | al 2098-T851 | pass |
| | Copol fibre | alu 2124-T851 | pass |
| | Copol fibre | alu 2195-T84 | pass |
| | Copol fibre | alu 2198-T851 | pass |
| | Copol fibre | alu 2199-T8XX | pass |
| | Copol fibre | alu 2219-T87 | pass |
| | Copol fibre | alu 2297-T87 | pass |
| | Copol fibre | alu 2324-T39 | pass |
| | Copol fibre | alclad 2524-T3 | pass |
| | Copol fibre | alu 7150-T7751 | pass |
| | Copol fibre | alu 7475-T761 | pass |
| | PBO-AS | alu 2024-T3 | fail |
| | PBO-HM | alu 2024-T3 | fail |
| | PBO-HM | alu 6061-T6 | pass |
| | PBO-HM | alu 7475-T761 | fail |
| | T300 Carbon | alu 2024-T3 | pass |

| | fibres | aluminium | pass/fail |
|---|---|---|---|
| | S-2 glass | Ti-6Al-4V | fail |
| | S-2 glass | ATI 425-L | fail |
| | Kevlar 49 | Ti-6Al-4V | fail |
| | Twaron HM | ATI 425-L | fail |
| | Twaron HM | ATI 425-LT | fail |
| | M5 | Ti-6Al-4V | fail |
| | M5 | Ti-6Al-4V-2Sn | fail |
| titanium alloys | Copol fibre | Ti-6Al-4V | fail |
| | PBO-AS | Ti-6Al-4V-2Sn | fail |
| | PBO-HM | Ti-6Al-4V-2Sn | fail |
| | PBO-HM | ATI 425-L | fail |
| | PBO-HM | ATI 425-LT | fail |
| | T300 Carbon | Ti-6Al-4V | fail |
| | T300 Carbon | ATI 425-LT | pass |
| | IM7 Carbon | Ti-6Al-4V | pass |
| | IM7 Carbon | Ti-6Al-4V aged | pass |
| | IM7 Carbon | ATI 425-L | pass |
| | IM7 Carbon | Ti-15V-3Cr-3Sn-3Al-ST790 | fail |
| | IM10 Carbon | Ti-15V-3Cr-3Sn-3Al-ST850 | pass |
| | T300 Carbon | 9Ni-4CO-0.3C St | fail |
| | IM7 Carbon | 9Ni-4CO-0.3C St | pass |
| | IM7 Carbon | 18Ni-AMS 6520 | pass |
| | IM10 Carbon | 18Ni-AMS 6521 | pass |
| steel alloys | IM10 Carbon | AerMet 100 St | pass |
| | T800 Carbon | 9Ni-4CO-0.3C St | pass |
| | T800 Carbon | 18Ni-AMS 6520 | pass |
| | T800 Carbon | 18Ni-AMS 6521 | fail |
| | T1000GB Carbo | 9Ni-4CO-0.3C St | pass |
| | T1000GB Carbo | 18Ni-AMS 6520 | pass |
| | T1000GB Carbo | AerMet 100 St | pass |

**Table 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4500589 A
- US 5039571 A
- US 2005175813 A1
- EP 2085215 A1